# DEMANDE DE BREVET EUROPEEN

(11) **EP 2 818 745 A1**
(43) Date de publication de la demande: **31.12.2014**
(21) Numéro de dépôt: 14173591.0
(22) Date de dépôt: 24.06.2014
(51) Int. Cl.: F16C 43/06, F16C 19/36

(54) **Bague de roulement**

(30) Priorité: 24.06.2013 FR 1355996
(71) Demandeur: NTN-SNR Roulements, 74000 Annecy (FR)
(72) Inventeur: Ehinger, Pierre, 74210 FAVERGES (FR); Pallanchard, Vincent, 74150 RUMILLY (FR)
(74) Mandataire: Derambure Conseil

(57) **Abrégé**

La bague pour roulement comprend :
- un corps principal (2') annulaire autour d'un axe de roulement (X), muni d'un trou traversant (8) de révolution d'axe transversal (Y),
- un bouchon (12) monté glissant juste pour s'étendre dans le trou traversant (8) de révolution.

La surface de roulement (7a) du corps principal (2') et une surface de roulement (42) de l'extrémité de pied (15) du bouchon (12) sont, dans une orientation prédéterminée du bouchon (12) autour de l'axe transversal (Y) et dans une profondeur prédéterminée du bouchon (12) selon l'axe transversal (Y), continues l'une avec l'autre et formant ensemble un chemin de roulement pour des corps roulants (5) du roulement.

Un système de fixation rigide (13) fixe le bouchon (12) sur le corps principal (2').

Le système de fixation rigide (13) comprend une première rainure (48), une deuxième rainure (45) ménagée dans le corps principal (2'), et un organe d'alignement rigide (52).

## Description

L'invention concerne, de façon générale, le domaine technique des bagues de roulement.

Plus précisément, l'invention concerne le domaine du remplissage des corps roulants d'unités de roulement, encore appelées ci-après roulements, comprenant deux bagues concentriques.

Il est connu de l'art antérieur différentes solutions visant à remplir une rangée de corps roulants par l'intermédiaire d'une découpe prévue sur une bague.

Notamment, la publication DE102008011060 se rapporte à un roulement comportant une bague intérieure et une bague extérieure. La bague intérieure comprend une découpe. Cette découpe permet le remplissage de corps roulants dans un espace annulaire situé entre les bagues intérieure et extérieure. Un organe de recouvrement est adapté pour venir en recouvrement de la découpe. L'organe de recouvrement est fixé au corps principal de la bague selon un axe parallèle à l'axe du roulement.

Une telle réalisation permet le remplissage d'une rangée de corps roulants dans un roulement comprenant une bague intérieure et une bague extérieure.

En variante, on peut procéder à un remplissage radial des corps roulants, comme par exemple décrit dans FR 2 749 624.

La mise en oeuvre de tels bouchons peut parfois induire des défauts dans un roulement. Notamment, il est utile que le bouchon subisse de manière fiable le même procédé de fabrication que le reste de la bague dont il fait partie, afin que, en fonctionnement, la présence d'un bouchon ne soit pas ressentie par le corps roulant. Ainsi, le bouchon fait face à deux problématiques opposées : il doit avoir une position définie très précisément, et ce tout au long du procédé de fabrication, et il doit être démontable/montable facilement pour permettre l'insertion des corps roulants.

US 2,759,243 décrit une bague pour roulement comprenant :
- un corps principal annulaire autour d'un axe de roulement, et comprenant une surface périphérique interne et une surface externe opposée à la surface périphérique interne, l'une des surfaces périphérique interne et externe comprenant une surface de roulement pour des corps roulants du roulement, le corps principal annulaire comprenant un trou traversant de révolution d'axe transversal s'étendant entre les surfaces périphérique interne et externe,
- un bouchon monté glissant juste pour s'étendre dans le trou traversant de révolution, et comprenant une extrémité de pied au niveau de la surface de roulement du corps principal, une extrémité de tête au niveau de la surface opposée à la surface de roulement, et une surface latérale de révolution autour d'un axe de bouchon,
   La surface de roulement du corps principal et une surface de roulement de l'extrémité de pied du bouchon étant, dans une orientation prédéterminée du bouchon autour de l'axe transversal et dans une profondeur prédéterminée du bouchon selon l'axe transversal, continues l'une avec l'autre et formant ensemble un chemin de roulement pour les corps roulants du roulement,
- un système de fixation rigide du bouchon sur le corps principal, adapté, dans un état actif, pour fixer le bouchon au corps principal dans une position relative définie dans laquelle le bouchon se trouve à la fois selon l'orientation et la profondeur prédéterminée, le système de fixation rigide pouvant être placé dans un état inactif dans lequel le bouchon peut être désassemblé du corps principal, ouvrant ainsi le trou traversant de révolution pour permettre de faire passer des corps roulants du roulement à travers le trou traversant de révolution.

Grâce à ces dispositions, d'une part le bouchon est bien maintenu tout au long du processus de fabrication, et d'autre part un montage très précis reste possible.

On continue toutefois de chercher à faciliter et fiabiliser le montage des bouchons. Ainsi, selon l'invention, on prévoit une bague dans laquelle, outre les caractéristiques mentionnées ci-dessus, le système de fixation rigide comprend :
- une première rainure ménagée dans l'extrémité de tête du bouchon, au niveau de la surface opposée à la surface de roulement, et présentant deux parois latérales opposées et un fond,
- une deuxième rainure ménagée dans le corps principal annulaire dans la surface opposée à la surface de roulement, et présentant deux parois latérales opposées et un fond, et
- un organe d'alignement rigide étendu assemblé au corps principal annulaire, et présentant deux parois latérales opposées et une paroi intérieure, de sorte que la coopération d'une paroi latérale de l'organe d'alignement rigide étendu avec une paroi latérale de la première rainure, et la coopération d'une paroi latérale opposée de l'organe d'alignement rigide étendu avec une paroi latérale de la deuxième rainure cause une rotation du bouchon dans le trou traversant de révolution autour de l'axe transversal.

Selon un mode de réalisation, le système de fixation rigide comprend un évidement formé sur le bouchon, une ouverture formée sur le corps principal annulaire, et un organe d'alignement rigide monté à la fois dans l'ouverture formée sur le corps principal annulaire et dans l'évidement formé sur le bouchon et coopérant avec ceux-ci pour les aligner l'un avec l'autre selon l'orientation prédéterminée.

Selon un mode de réalisation, l'organe d'alignement est un organe d'alignement et de sollicitation sollicitant axialement le bouchon par rapport au corps principal annulaire selon l'axe transversal en la profondeur prédéterminée.

Selon un mode de réalisation, l'organe d'alignement rigide étendu est fixé au corps latéral annulaire de sorte que la coopération de la paroi intérieure avec le fond de la première rainure cause un déplacement du bouchon par rapport au corps principal annulaire selon l'axe transversal.

Selon un mode de réalisation, la deuxième rainure s'étend de part et d'autre du trou traversant de révolution.

Selon un mode de réalisation, la deuxième rainure présente une portée angulaire supérieure à 180°, notamment supérieure à 270°.

Selon un mode de réalisation, l'organe d'alignement rigide étendu est une portion d'anneau d'axe un axe de la bague quand le système de fixation rigide est dans son état actif.

Selon un mode de réalisation, l'extrémité de pied du bouchon comprend une première butée associée à une deuxième butée du trou traversant de révolution définissant une profondeur maximale de l'extrémité de pied du bouchon, et dans lequel le système de fixation est adapté pour fixer le bouchon au corps principal dans une position relative définie dans laquelle la première butée et la deuxième butée sont en appui l'une sur l'autre.

Selon un autre aspect, l'invention se rapporte à un roulement comprenant une bague intérieure et une bague extérieure, un espace de roulement étant défini entre les bagues intérieure et extérieure, des corps roulants étant disposés dans l'espace de roulement, l'une des bagues intérieure et extérieure étant une bague telle que mentionnée ci-dessus.

Selon un autre aspect, l'invention se rapporte à un procédé de fabrication d'un roulement, comprenant :
- on fournit un corps principal annulaire autour d'un axe de roulement, comprenant une surface interne et une surface externe opposée à la surface interne, l'une des surfaces interne et externe comprenant une ébauche de surface de roulement pour des corps roulants du roulement, le corps principal annulaire comprenant un trou traversant de révolution d'axe s'étendant entre les surfaces interne et externe, et présentant une surface périphérique autour de l'axe,
- on fournit un bouchon comprenant une extrémité de pied, une extrémité de tête et une surface latérale de révolution autour d'un axe de bouchage s'étendant entre les extrémités de tête et de pied,
- on fournit un système de fixation rigide du bouchon sur le corps principal,
- on monte le bouchon glissant juste dans le trou traversant de révolution,
- avec le système de fixation rigide, on fixe le bouchon dans une position prédéterminée, comprenant à la fois une orientation prédéterminée du bouchon autour de l'axe et une profondeur prédéterminée du bouchon selon l'axe, dans le trou traversant de révolution, l'extrémité de pied au niveau de l'ébauche de surface de roulement du corps principal, l'extrémité de tête au niveau de la surface opposée à l'ébauche de surface de roulement,
   la fixation comprenant l'indexation en rotation de l'extrémité de pied du bouchon par rapport au corps principal autour de l'axe, et le maintien en profondeur,
- on meule l'ébauche de surface de roulement et l'extrémité de pied du bouchon sans déplacement du bouchon selon l'axe par rapport au corps principal annulaire, pour générer une surface de roulement de l'extrémité de pied du bouchon et une surface de roulement du corps principal continues l'une avec l'autre et formant ensemble un chemin de roulement pour les corps roulants du roulement,
- on traite thermiquement la surface de roulement et l'extrémité de pied du bouchon pour initier la transformation martensitique de l'acier,
- on rectifie la surface de roulement et l'extrémité de pied du bouchon,
- on place le système de fixation dans son état inactif, et on désassemble le bouchon du corps principal annulaire,
- on assemble le corps principal annulaire à une autre bague avec interposition d'un espace de roulement,
- on introduit des corps roulants dans l'espace de roulement à travers le trou traversant de révolution,
- on monte à nouveau le bouchon glissant juste dans le trou traversant de révolution, et
- avec ledit système de fixation rigide, on fixe le bouchon dans la position prédéterminée.

Selon un mode de réalisation, le système de fixation rigide comprend un circlips monté sur le corps principal annulaire par avoyage.

On décrit maintenant brièvement les figures des dessins.
La figure 1 est une vue en perspective partiellement écorchée d'un roulement.
La figure 2 est une vue en perspective d'un bouchon pour le roulement de la figure 1, qui ne fait pas l'objet de la présente invention.
La figure 3 est une vue partielle en coupe à travers le roulement de la figure 1, en éclaté.
La figure 4 est une vue correspondant à la figure 3, mais pas en éclaté.
La figure 5 est une vue en perspective en éclaté d'un mode de réalisation.
La figure 6 est une vue similaire à la figure 4 pour le mode de réalisation.

Ci-après un exposé détaillé de plusieurs modes de réalisation de l'invention assorti d'exemples et de référence aux dessins.

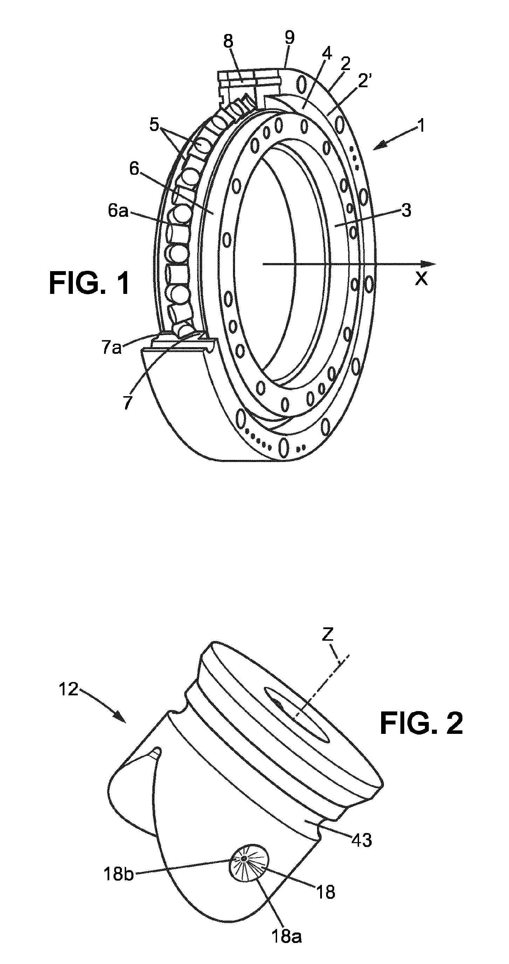

La présente invention se rapporte aux roulements. Un exemple de tel roulement 1 est représenté sur la figure 1. Sur la figure 1, le roulement 1 est représenté avec sa bague extérieure 2 en écorché, afin de favoriser la compréhension de l'invention. Un tel roulement 1 comporte classiquement une bague intérieure 3 annulaire autour d'un axe X. Un tel roulement 1 comprend également une bague extérieure 2 disposée concentrique avec la bague intérieure 3 autour de l'axe X. Un espace de roulement 4 est ménagé entre les bagues intérieure 3 et extérieure 2. L'espace de roulement 4 accueille des corps roulants 5.

Le roulement 1 est destiné à être utilisé dans un système tournant comprenant par exemple un arbre sur lequel est montée serrée la bague intérieure 3, et un logement auquel est assemblé la bague extérieure 2. Ainsi, le roulement 1 est utilisé pour faciliter un mouvement de rotation respective de l'arbre et du logement autour de l'axe X.

Comme cela est visible, notamment sur la figure 1, la bague intérieure 3 comprend une surface annulaire périphérique extérieure 6 faisant face à une surface annulaire périphérique intérieure 7 de la bague extérieure 2. Les surfaces annulaires périphériques extérieure 6 et intérieure 7 définissent entre elles l'espace de roulement 4. Chacune des surfaces annulaires périphériques extérieure 6 et intérieure 7 comprend une surface de roulement 6a, 7a, respectivement, qui est la partie de la surface annulaire périphérique respective qui est effectivement au contact des corps roulants 5 lors de l'utilisation du roulement.

À titre d'exemple purement illustratif, on a représenté ici un agencement particulier de corps roulants 5. Les corps roulants 5 sont tous des rouleaux cylindriques identiques, présentant chacun une surface cylindrique entre deux faces planes d'extrémité. Par ailleurs, ils ont chacun une longueur égale à son diamètre. Les corps roulants 5 sont disposés de manière alternée, selon deux configurations respectives distinctes. Selon une première configuration, la surface cylindrique du corps roulant 5 roule sur une première partie de chemin de roulement, alors qu'une face plane d'extrémité du corps roulant 5 glisse en tournant autour de l'axe du cylindre sur une deuxième partie du chemin de roulement de la même bague. Selon la deuxième configuration, la surface cylindrique du corps roulant 5 roule sur la deuxième partie du chemin de roulement, alors qu'une face plane d'extrémité du corps roulant 5 glisse en tournant sur la première partie du chemin de roulement. Ainsi, deux corps roulants 5 successifs sont disposés en formant un angle de 90° l'un avec l'autre le long du chemin de roulement de la même bague. Les corps roulants 5 ainsi disposés peuvent être placés avec une très grande concentration le long du chemin de roulement et être maintenus dans le roulement par eux-mêmes sans nécessiter de cage. Les corps roulants 5 peuvent être en contact ponctuel deux à deux au niveau de leur surface cylindrique respective adjacente deux à deux.

Les corps roulants 5 sont installés dans l'espace de roulement 4 par l'intermédiaire d'un trou traversant 8 ménagé dans une des bagues. Pour fixer les idées, dans la suite de la description, on considérera le trou traversant 8 ménagé dans la bague extérieure 2. Ainsi, la bague extérieure 2 comprend un corps annulaire 2' dans lequel est ménagé le trou traversant 8. Toutefois, le trou traversant pourrait en alternative être ménagé dans la bague intérieure 3. Le trou traversant 8 s'étend de la surface annulaire périphérique intérieure 7 de la bague extérieure 2 à la surface extérieure opposée 9 de la bague extérieure 2. On notera que, en variante, la surface opposée 9 pourra prendre toute géométrie adaptée à l'utilisation souhaitée. Dans l'exemple présenté, le trou traversant 8 s'étend selon une direction depuis l'axe X du roulement et orthogonalement à celui-ci. Toutefois, selon les modes de réalisation, il pourrait en être autrement.

Dans ce qui suit, le terme « axial » sera utilisé pour désigner ce qui s'étend selon l'axe Y du trou traversant 8. Le terme « radial » sera utilisé pour désigner ce qui s'étend de manière orthogonale à l'axe Y et depuis l'axe Y.

Le trou traversant 8 comporte une géométrie permettant de faire passer des corps roulants 5 à travers celui-ci depuis l'extérieur du roulement jusqu'à l'espace de roulement 4. Selon la disposition et la forme des corps roulants 5, la forme du trou traversant 8 pourra être choisie. On choisit par exemple un trou traversant de révolution.

Un système de bouchage est utilisé pour boucher le trou traversant 8. Lorsqu'il est bouché par le système de bouchage, le trou traversant 8 ne peut pas laisser passer de corps roulants 5 à travers lui entre l'espace de roulement 4 et l'extérieur, dans un sens comme dans l'autre. Lorsque le système de bouchage est absent, les corps roulants 5 peuvent passer à travers le trou traversant 8 entre l'espace de roulement 4 et l'extérieur, dans un sens comme dans l'autre.

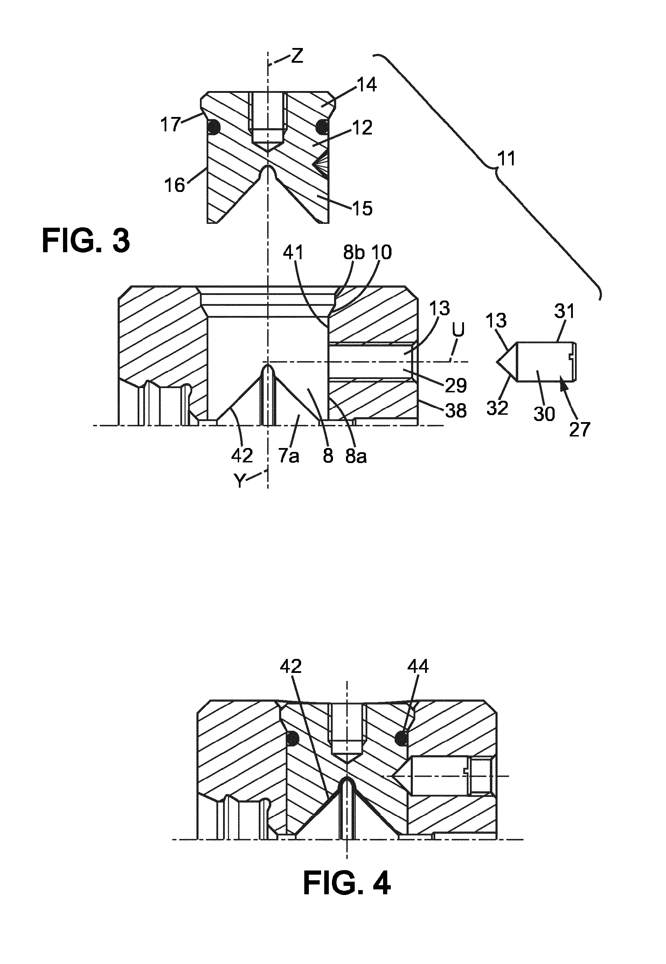

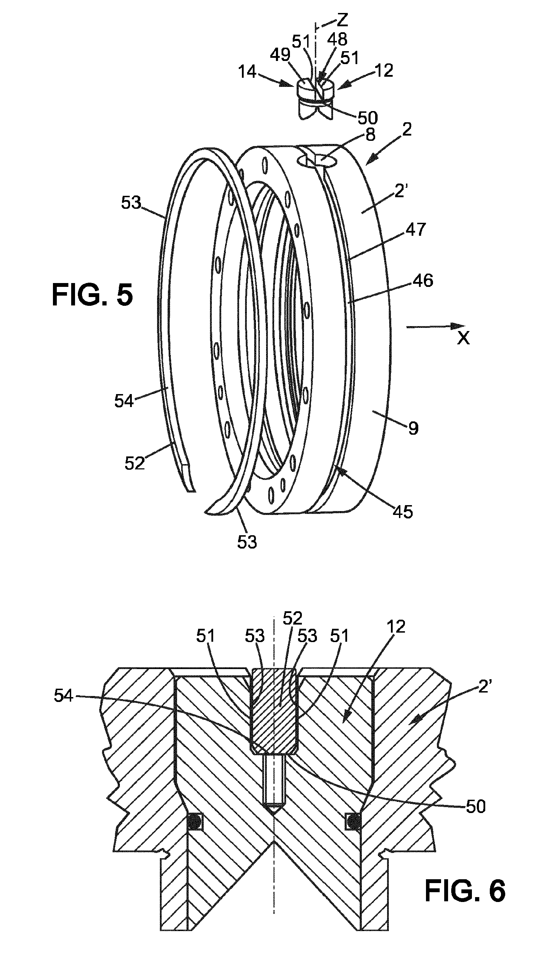

Les figures 2 à 4 donnent un premier exemple d'un système de bouchage qui n'est pas couvert par les revendications initialement déposées. Il pourra être fait référence à la présente description lors de la description du mode de réalisation des figures 5 à 7. La demanderesse se réserve le droit de déposer une demande divisionnaire pour un ou plusieurs aspects innovants de cette réalisation. Cette description est donnée en considérant un bouchage de la bague extérieure 2. Elle devra être adaptée en conséquence pour un bouchage de la bague intérieure 3. Ainsi, ce qui est « intérieur » désigne ce qui est proche du chemin de roulement, et ce qui est « extérieur » désigne ce qui en est éloigné. Pour commencer, en relation avec la figure 3, on pourra remarquer que le trou traversant 8 comporte deux portions 8a et 8b concentriques d'axe l'axe Y du trou traversant 8, disposées, pour une première portion 8a, à proximité de la surface de roulement 7a et, pour la deuxième portion 8b éloignée de la surface de roulement 7a. La deuxième portion 8b comporte une dimension supérieure à celle de la dimension de la première portion 8a. Par dimension, on considère ici une dimension dans un plan normal à l'axe transversal Y du trou traversant 8. Par conséquent, le trou traversant 8 est muni d'un épaulement 10 formant une butée à la jonction des deux portions 8a et 8b. La butée est disposés selon un cercle centré sur l'axe Y et orthogonal à celui-ci.

Le système de bouchage 11 comprend deux parties principales : un bouchon 12 et un système de fixation 13. Le bouchon 12 présente une géométrie qui lui permette de s'étendre dans le trou traversant 8. Ainsi, il s'étend le long d'un axe de bouchage Z qui est confondu avec l'axe Y du trou traversant 8 quand le bouchon 12 est monté dans le trou traversant 8. Le bouchon 12 comporte une extrémité de tête 14 et une extrémité de pied 15 opposées réparties le long de l'axe Z. La surface périphérique latérale 16 du bouchon 12 est complémentaire de la surface périphérique 41 du trou traversant 8, de sorte que le bouchon 12 peut s'étendre dans le trou traversant 8 avec son extrémité de tête 14 au niveau de la surface extérieure 9 de la bague extérieure 2, et son extrémité de pied 15 au niveau de la surface de roulement 7a de la bague extérieure 2. En particulier, la surface périphérique latérale 16 peut comporter un rétrécissement 17 coopérant avec l'épaulement 10 du trou traversant 8 pour définir une profondeur maximale à laquelle s'étend le bouchon 12 dans le trou traversant 8. La surface périphérique latérale 16 est dotée d'un évidement conique 18 comportant une ouverture 18a sensiblement circulaire (correspondant à l'intersection d'un cône de révolution d'axe radial avec un cylindre de révolution d'axe axial) au niveau de la surface périphérique latérale 16, et d'une paroi latérale 18b conique. L'axe du cône est l'axe radial du bouchon 12.

Le système de bouchage comprend également un système de fixation 13 du bouchon 12. Le système de fixation 13 comprend un unique organe rigide de maintien en profondeur et d'indexation en rotation 27. L'indexation en rotation concerne l'orientation de l'extrémité de pied du bouchon par rapport à l'axe Y. Pour le maintien en profondeur, on prévoit que l'organe ride 27 permet de déplacer (tirer ou pousser) le bouchon 12 avec le rétrécissement 17 en appui sur l'épaulement 10 ménagé dans la bague extérieure 2. À cet effet, on prévoit un trou taraudé 29 ménagé dans une portion latérale du corps 2', d'axe radial U, et débouchant d'un côté au niveau de la surface périphérique interne 41 du trou traversant 8, de l'autre côté au niveau de la face d'extrémité 38 du corps annulaire 2'. Par ailleurs, on prévoit une vis 30 présentant un corps fileté 31 orienté selon l'axe U. Le filetage du corps fileté 31 est complémentaire de celui du trou taraudé 29. La vis 30 peut comporter également une tête de vis présentant une empreinte pour la réception d'un outil de vissage adapté pour impartir à la vis un mouvement de rotation autour de l'axe U.

La vis 30 comprend également une extrémité conique 32 opposée à l'extrémité de tête. La forme de l'extrémité conique 32 est complémentaire de celle de l'évidement conique 18 du bouchon 12. Lorsque la vis 30 est vissée dans le trou taraudé 29, elle progresse radialement vers l'axe Y. Si l'évidement conique 18 du bouchon 12 n'est pas exactement à la position souhaitée (profondeur selon l'axe Y ou orientation par rapport à cet axe), les formes coniques complémentaires de la tête de vis 32 et de l'évidement conique 18 coopèrent par action de came pour, graduellement au cours du visage, déplacer le bouchon 12 le long de et/ou autour de l'axe Y. Ainsi, la portion axialement intérieure ou extérieure de l'extrémité conique 32 de la vis 30 coopère avec des portions respectivement axialement intérieure ou extérieure de l'évidement conique pour solliciter axialement le bouchon selon l'axe Y. L'une ou l'autre des portions latérales de l'extrémité conique 32 de la vis 30 coopère avec une portion respective latérale de l'évidement conique pour aligner le bouchon 12 par rapport au corps annulaire 2' par rotation autour de l'axe Y.

Ainsi, dans la position représentée sur la figure 4, le bouchon 12 ne peut pas se déplacer axialement selon l'axe Y vers le l'intérieur par appui sur l'épaulement 10 du corps principal 2' annulaire de la bague extérieure 2. Le bouchon 12 ne peut pas se déplacer axialement selon l'axe Y vers l'extérieur par appui sur la vis 30. Le bouchon 12 est disposé en une profondeur déterminée selon l'axe Y.

Dans une position prédéterminée du bouchon 12, comprenant à la fois une profondeur prédéterminée définie par l'épaulement 10, et une orientation prédéterminée définie par la vis 30 rigide, une surface de roulement 42 de l'extrémité de pied du bouchon 12 est disposée continue avec la surface de roulement 7a de la bague extérieure 2, et forme avec elle un chemin de roulement pour les corps roulants 5 du roulement.

Si le bouchon 12 n'est pas dans la position prédéterminée, par exemple en n'étant pas à la profondeur prédéterminée, il en résulte une marche à franchir pour le corps roulant. Si le bouchon 12 n'est pas dans l'orientation prédéterminée, la surface de roulement de l'extrémité de pied du dispositif bouchant 12 n'est pas parfaitement alignée avec celle de la bague extérieure 2. Il en résulte, dans un cas comme dans l'autre, un défaut pouvant entraîner une défaillance du roulement.

Le système de fixation peut prendre un état actif, qui est celui représenté sur la figure 4, dans lequel le trou traversant 8 est bouché par le bouchon 12. Alternativement, le système de fixation peut prendre un état inactif, en dévissant la vis 30, dans lequel le bouchon 12 peut être retiré du trou traversant 8, et dans lequel des corps roulants peuvent passer à travers le trou traversant 8 de la bague extérieure 2.

Le bouchon 12 peut comporter une gorge 43 servant de siège à un joint d'étanchéité 44. La gorge 43 est par exemple réalisée annulaire autour de l'axe Z, et est disposée plus proche du centre du roulement que le rétrécissement 17.

Le produit qui vient d'être décrit peut être fabriqué par la suite d'opérations suivantes :
- On fournit un corps principal annulaire 2' autour d'un axe de roulement, comprenant une surface périphérique interne 7 et une surface périphérique externe 9 opposée à la surface périphérique interne 7, la surface périphérique interne comprenant une ébauche de surface de roulement pour des corps roulants du roulement, le corps principal annulaire 2' comprenant un trou traversant 8 de révolution d'axe Y s'étendant entre les surfaces périphériques interne 7 et externe 9, et présentant une surface périphérique 41 autour de l'axe Y,
- On fournit un système de bouchage comprenant un bouchon 12 comprenant une extrémité de pied 15, une extrémité de tête 14 et une surface latérale de révolution 16 autour d'un axe de bouchage Z s'étendant entre les extrémités de tête 14 et de pied 15, le système de bouchage comprenant en outre un système de fixation 13 du bouchon 12 sur le corps principal 2',
- On monte le bouchon 12 glissant juste dans le trou traversant de révolution 8,
- Avec le système de fixation 13, on fixe le bouchon 12 dans une position prédéterminée, comprenant à la fois une orientation prédéterminée du bouchon autour de l'axe Y et une profondeur prédéterminée du bouchon 12 selon l'axe Y, dans le trou traversant 8 de révolution, l'extrémité de pied 15 au niveau de la surface de roulement du corps principal 2', l'extrémité de tête 14 au niveau de la surface opposée à la surface de roulement,
   la fixation comprenant à la fois l'indexation en rotation de l'extrémité de pied 15 du bouchon 12 par rapport au corps principal 2' autour de l'axe Y, et le maintien en profondeur par vissage de la vis 30 rigide dans le trou taraudé 29,
- on meule l'ébauche de surface de roulement et l'extrémité de pied 15 du bouchon 12 sans déplacement axial du bouchon par rapport au corps principal annulaire ni déformation plastique de la vis 30, pour générer une surface de roulement 42 de l'extrémité de pied 15 du bouchon 12 et une surface de roulement 7a du corps principal 2' continues l'une avec l'autre et formant ensemble un chemin de roulement pour les corps roulants du roulement,
- on traite thermiquement l'ébauche de surface de roulement et l'extrémité de pied 15 du bouchon 12 pour initier la transformation martensitique de l'acier (par exemple, on traite thermiquement l'ensemble du système),
- on rectifie les surfaces de roulement 42 et 7a,
- on place le système de fixation 13 dans son état inactif par dévissage de la vis 30, et on désassemble le bouchon 12 du corps principal annulaire 2',
- on assemble le corps principal annulaire 2' à une autre bague, ici une bague intérieure 3, avec interposition d'un espace de roulement 4,
- on introduit des corps roulants 5 dans l'espace de roulement 4, dont au moins un à travers le trou traversant de révolution 8,
- on monte à nouveau le bouchon 12 glissant juste dans le trou traversant de révolution 8, et
- avec ledit système de fixation 13, on fixe le bouchon 12 dans la position prédéterminée.

Les figures 5 et 6 décrivent un mode de réalisation de l'invention. Pour cette description, on pourra faire référence à certaines caractéristiques décrites ci-dessus par référence aux figures 2 à 4, et communes aux deux réalisations. Dans ce mode de réalisation, la bague 2 comprend toujours un corps annulaire 2' et un bouchon 12. Une rainure 45 est ménagée dans le corps annulaire 2'. La rainure 45 est ménagée dans la surface extérieure 9.

La rainure 45 s'étend sensiblement comme un anneau centré sur l'axe X de la bague. La rainure 45 débouche dans le trou traversant 8. En particulier, la rainure 45 est disposée de part et d'autre du trou traversant 8. Par exemple, elle peut s'étendre sur la totalité de la périphérie de la surface extérieure 9. En variante, elle peut ne pas s'étendre sur la totalité de la périphérie de la surface extérieure 9, mais seulement sur une portion de celle-ci. Dans ce cas, le trou traversant 8 peut être sensiblement disposé au milieu de la rainure 45. Par ailleurs, la rainure 45 peut être disposée dans un plan médian du trou traversant 8.

La rainure 45 peut comprendre un fond 46 duquel s'étendent de part et d'autre deux bords latéraux 47 reliant chacun le fond 46 à la surface extérieure 9. Un seul bord latéral 47 est visible sur la figure 5, l'autre bord latéral étant opposé de manière non visible sur la figure 5 du fait de la perspective utilisée.
L'extrémité de tête 14 du bouchon 12 comporte une rainure 48. La rainure 48 présente une épaisseur similaire à celle de la rainure 45. La rainure 48 peut présenter une profondeur légèrement inférieure à celle de la rainure 45. La profondeur de la rainure 48 est mesurée entre la surface extérieure 49 du bouchon 12 et un fond 50 de la rainure 48. L'épaisseur de la rainure 48 est mesurée entre deux parois latérales opposées 51.

Le système de fixation rigide comprend un anneau rigide 52 installable dans la rainure 45. L'anneau rigide 52 est complémentaire de la rainure 45. Ainsi, l'anneau rigide 52 peut être orienté centré sur l'axe X de la bague 2, et présente alors une étendue angulaire au plus égale à l'étendue angulaire de la rainure 45, une épaisseur de l'ordre de l'épaisseur de la rainure 45, afin d'être installé monté en force dans la rainure 45. En particulier, l'anneau rigide 52 comprend deux parois latérales opposées 53.

L'anneau rigide 52 peut présenter une étendue angulaire au moins égale à 90° de chaque côté du bouchon 12, afin d'enserrer le corps annulaire 2' et de retenir le bouchon 12 dans celui-ci à la profondeur souhaitée. Ainsi, la portée angulaire de l'anneau rigide (et par conséquent de la rainure qui le reçoit) est au moins égale à 180°, voire au moins égale à 270°. Par ailleurs, l'anneau rigide 52 coopère avec la rainure 48 du bouchon 12 pour orienter en rotation le bouchon 12 par rapport à l'axe Z.

Ainsi, lorsque l'anneau rigide 52 est assemblé au corps annulaire 2', par coopération de ses faces latérales 53 serrées avec les faces latérales 47 du corps annulaire 2', chacune des faces latérales annulaires 53 de l'anneau rigide 52 coopère avec une des faces annulaires correspondante 51 du bouchon 12, afin d'aligner celui-ci par rapport à l'axe Z. La coopération d'une face latérale de l'anneau rigide étendu avec une paroi de la rainure du bouchon, et la coopération d'une face latérale opposée de l'anneau rigide étendu avec une paroi de la rainure du corps annulaire cause une rotation du bouchon dans le trou traversant de révolution autour de l'axe transversal.

Par ailleurs, le bord intérieur 54 de l'anneau rigide 52 coopère avec le fond 50 de la rainure 48 du bouchon 12 (notamment du fait de la profondeur inférieure de la rainure 48) pour solliciter axialement le bouchon 12 dans la profondeur terminée selon l'axe Z.

L'anneau rigide 52 peut être assemblé à la rainure 45 du corps annulaire 2' par avoyage. C'est-à-dire que l'assemblage peut inclure un certain degré de déformation élastique de l'anneau rigide 52. Toutefois, dans les étapes, décrites ci-dessus pour le premier mode de réalisation, de réalisation du chemin de roulement, y compris au niveau de l'extrémité de pied du bouchon 12, l'anneau 52, assemblé au corps annulaire 2', peut être considéré comme rigide, de sorte que la position et l'orientation du bouchon 12 sont définies de manière précise au cours de ces opérations de réalisation du chemin de roulement.
Une fois le chemin de roulement réalisé, l'anneau rigide 52 peut être retiré, et le bouchon 12 formé peut être retiré, et le roulement peut être réalisé comme décrit précédemment pour le premier mode de réalisation. En utilisation, l'anneau rigide 52 est installé, à nouveau par avoyage, et retient le bouchon 12 dans la position prédéterminée.

## Revendications

1. Bague pour roulement comprenant :
- un corps principal (2') annulaire autour d'un axe de roulement (X), et comprenant une surface périphérique (7) interne et une surface externe (9) opposée à la surface périphérique interne (7), l'une des surfaces périphérique interne (7) et externe (9) comprenant une surface de roulement (7a) pour des corps roulants (5) du roulement, le corps principal (2') annulaire comprenant un trou traversant (8) de révolution d'axe transversal (Y) s'étendant entre les surfaces périphérique interne (7) et externe (9),
- un bouchon (12) monté glissant juste pour s'étendre dans le trou traversant (8) de révolution, et comprenant une extrémité de pied (15) au niveau de la surface de roulement (7a) du corps principal (2'), une extrémité de tête (14) au niveau de la surface opposée à la surface de roulement (7a), et une surface latérale (16) de révolution autour d'un axe de bouchon (Z),
La surface de roulement (7a) du corps principal (2') et une surface de roulement (42) de l'extrémité de pied (15) du bouchon (12) étant, dans une orientation prédéterminée du bouchon (12) autour de l'axe transversal (Y) et dans une profondeur prédéterminée du bouchon (12) selon l'axe transversal (Y), continues l'une avec l'autre et formant ensemble un chemin de roulement pour les corps roulants (5) du roulement,
- un système de fixation rigide (13) du bouchon (12) sur le corps principal (2'), adapté, dans un état actif, pour fixer le bouchon (12) au corps principal (2') dans une position relative définie dans laquelle le bouchon (12) se trouve à la fois selon l'orientation et la profondeur prédéterminée, le système de fixation rigide (13) pouvant être placé dans un état inactif dans lequel le bouchon (12) peut être désassemblé du corps principal (2'), ouvrant ainsi le trou traversant (8) de révolution pour permettre de faire passer des corps roulants (5) du roulement à travers le trou traversant (8) de révolution,
**Caractérisé en ce que** le système de fixation rigide (13) comprend :
- une première rainure (48) ménagée dans l'extrémité de tête (14) du bouchon (12), au niveau de la surface (9) opposée à la surface de roulement, et présentant deux parois latérales (51) opposées et un fond (50),
- une deuxième rainure (45) ménagée dans le corps principal (2') annulaire dans la surface opposée (9) à la surface de roulement, et présentant deux parois latérales (47) opposées et un fond (46), et
- un organe d'alignement rigide (52) étendu assemblé au corps principal (2') annulaire, et présentant deux parois latérales (53) opposées et une paroi intérieure (54), de sorte que la coopération d'une paroi latérale (53) de l'organe d'alignement rigide (52) étendu avec une paroi latérale (51) de la première rainure (48), et la coopération d'une paroi latérale (53) opposée de l'organe d'alignement rigide (52) étendu avec une paroi latérale (47) de la deuxième rainure (45) cause une rotation du bouchon (12) dans le trou traversant (8) de révolution autour de l'axe transversal (Y).

2. Bague selon la revendication 1, dans laquelle le système de fixation rigide (13) comprend un évidement (18 ; 48) formé sur le bouchon (12), une ouverture (29 ; 45) formée sur le corps principal (2') annulaire, et un organe d'alignement rigide (30 ; 52) monté à la fois dans l'ouverture (29 ; 45) formée sur le corps principal (2') annulaire et dans l'évidement (18 ; 48) formé sur le bouchon (12) et coopérant avec ceux-ci pour les aligner l'un avec l'autre selon l'orientation prédéterminée.

3. Bague selon la revendication 2 dans laquelle l'organe d'alignement (30 ; 52) est un organe d'alignement et de sollicitation sollicitant axialement le bouchon (12) par rapport au corps principal (2') annulaire selon l'axe transversal (Y) en la profondeur prédéterminée.

4. Bague selon l'une quelconque des revendications 1 à 3 dans laquelle l'organe d'alignement rigide (52) étendu est fixé au corps latéral (2') annulaire de sorte que la coopération de la paroi intérieure (54) avec le fond (50) de la première rainure (48) cause un déplacement du bouchon (12) par rapport au corps principal (2') annulaire selon l'axe transversal (Y).

5. Bague selon l'une quelconque des revendications 1 à 4 dans laquelle la deuxième rainure (45) s'étend de part et d'autre du trou traversant (8) de révolution.

6. Bague selon la revendication 5 dans laquelle la deuxième rainure (45) présente une portée angulaire supérieure à 180°, notamment supérieure à 270°.

7. Bague selon l'une des revendications 1 à 6, dans laquelle l'organe d'alignement rigide (52) étendu est une portion d'anneau d'axe un axe (X) de la bague quand le système de fixation rigide (13) est dans son état actif.

8. Bague selon l'une des revendications 1 à 7, dans laquelle l'extrémité de pied (15) du bouchon (12) comprend une première butée (17) associée à une deuxième butée (10) du trou traversant (8) de révolution définissant une profondeur maximale de l'extrémité de pied (15) du bouchon (12), et dans lequel le système de fixation (13) est adapté pour fixer le bouchon (12) au corps principal (2') dans une position relative définie dans laquelle la première butée (17) et la deuxième butée (10) sont en appui l'une sur l'autre.

9. Roulement comprenant une bague intérieure (3) et une bague extérieure (2), un espace de roulement (4) étant défini entre les bagues intérieure (3) et extérieure (2), des corps roulants (5) étant disposés dans l'espace de roulement (4), l'une des bagues intérieure (3) et extérieure (2) étant une bague selon l'une quelconque des revendications 1 à 8.

10. Procédé de fabrication d'un roulement selon la revendication 9, comprenant :
- on fournit un corps principal (2') annulaire autour d'un axe de roulement, comprenant une surface interne (7) et une surface externe (9) opposée à la surface interne (7), l'une des surfaces interne (7) et externe (9) comprenant une ébauche de surface de roulement pour des corps roulants (5) du roulement, le corps principal annulaire (2') comprenant un trou traversant (8) de révolution d'axe (Y) s'étendant entre les surfaces interne (7) et externe (9), et présentant une surface périphérique (41) autour de l'axe (Y),
- on fournit un bouchon (12) comprenant une extrémité de pied (15), une extrémité de tête (14) et une surface latérale de révolution autour d'un axe de bouchage (Z) s'étendant entre les extrémités de tête (14) et de pied (15),
- on fournit un système de fixation rigide (13) du bouchon (12) sur le corps principal (2'),
- on monte le bouchon (12) glissant juste dans le trou traversant (8) de révolution,
- avec le système de fixation rigide (13), on fixe le bouchon (12) dans une position prédéterminée, comprenant à la fois une orientation prédéterminée du bouchon (12) autour de l'axe (Y) et une profondeur prédéterminée du bouchon (12) selon l'axe (Y), dans le trou traversant (8) de révolution, l'extrémité de pied (15) au niveau de l'ébauche de surface de roulement du corps principal (2'), l'extrémité de tête (14) au niveau de la surface opposée à l'ébauche de surface de roulement,
la fixation comprenant l'indexation en rotation de l'extrémité de pied (15) du bouchon (12) par rapport au corps principal (2') autour de l'axe (Y), et le maintien en profondeur,
- on meule l'ébauche de surface de roulement et l'extrémité de pied (15) du bouchon (12) sans déplacement du bouchon (12) selon l'axe (Y) par rapport au corps principal (2') annulaire, pour générer une surface de roulement de l'extrémité de pied (15) du bouchon (12) et une surface de roulement du corps principal continues l'une avec l'autre et formant ensemble un chemin de roulement pour les corps roulants (5) du roulement,
- on traite thermiquement la surface de roulement et l'extrémité de pied (15) du bouchon (12) pour initier la transformation martensitique de l'acier,
- on rectifie la surface de roulement et l'extrémité de pied (15) du bouchon (12),
- on place le système de fixation (13) dans son état inactif, et on désassemble le bouchon (12) du corps principal (2') annulaire,
- on assemble le corps principal (2') annulaire à une autre bague (3) avec interposition d'un espace de roulement (4),
- on introduit des corps roulants (5) dans l'espace de roulement (4) à travers le trou traversant (8) de révolution,
- on monte à nouveau le bouchon (12) glissant juste dans le trou traversant (8) de révolution, et
- avec ledit système de fixation rigide (11), on fixe le bouchon (12) dans la position prédéterminée.

11. Procédé selon la revendication 10, dans lequel le système de fixation rigide (13) comprend un circlips (52) monté sur le corps principal (2') annulaire par avoyage.
